Europäisches Patentamt

European Patent Office

Office européen des brevets

(19)

(11) Veröffentlichungsnummer : **0 024 251**
**B1**

(12) **EUROPÄISCHE PATENTSCHRIFT**

(45) Veröffentlichungstag der Patentschrift :
**24.08.83**

(21) Anmeldenummer : **80710018.5**

(22) Anmeldetag : **23.07.80**

(51) Int. Cl.³ : **B 23 C   3/12**, B 23 C   5/10,
B 23 D 57/00

(54) **Stichsäge mit stabförmigen rotierenden Werkzeug.**

(30) Priorität : **17.08.79 DE 2933380**

(43) Veröffentlichungstag der Anmeldung :
**25.02.81 Patentblatt 81/08**

(45) Bekanntmachung des Hinweises auf die Patenterteilung : **24.08.83 Patentblatt 83/34**

(84) Benannte Vertragsstaaten :
**AT CH FR GB IT LI SE**

(56) Entgegenhaltungen :
**DE A 2 553 387**
**DE C 97 884**
**DE C 635 172**
**GB A 350 083**
**GB A 680 412**
**US A 3 003 224**
**US A 3 863 316**

(73) Patentinhaber : **Mroczkowski, Zbigniew**
**Tristramweg 17**
**D-8240 Berchtesgaden-Stanggass (DE)**

(72) Erfinder : **Mroczkowski, Zbigniew**
**Tristramweg 17**
**D-8240 Berchtesgaden-Stanggass (DE)**

(74) Vertreter : **Wochinger, Jakob F., Dipl.-Ing.**
**Frühlingstrasse 9**
**D-8213 Aschau (DE)**

## Stichsäge mit stabförmigem rotierendem Werkzeug

Die Erfindung betrifft eine Stichsäge mit einer mit einem Antriebsmotor in Drehantriebsverbindung stehenden Werkzeugspindel, mit der ein Arbeitstisch zum Auflegen eines zu sägenden plattenförmigen Werkstücks fest verbindbar ist, wobei ein stabförmiges, rotierendes Werkzeug durch eine Öffnung im Arbeitstisch in Verlängerung der Spindelachse stummelartig bis in den zu bearbeitenden Bereich des Werkstücks vorspringt und entlang wenigstens einer wendelförmig um seinen Umfang verlaufende Linie Schneidelemente trägt.

Diese Stichsäge dient zum Bearbeiten, insbesondere zum Schneiden, Nuten oder Glätten von Werkstücken aus Holz, Kunststoff, Messing, Aluminium oder ähnlichen, leicht zerspanbaren Werkstoffen.

Von Heimwerkern, Modellbauern, Bastlern werden für genaue und anspruchsvolle Arbeiten eine Vielzahl von Geräten und Werkzeugen benötigt. Abgesehen von Drehmaschinen werden in erster Linie Maschinen benötigt, die zum Schneiden, Sägen, Fräsen und Glätten geeignet sind.

Zum Schneiden von Werkstücken werden Kreis-, Band-, Stich-, Laubsägen und dgl. verwendet, die alle nach dem Prinzip der Säge arbeiten, d. h. es wird mit aufeinanderfolgenden geschärften Zähnen eine Zerspanung des Werkstücks im Bereich eines schmalen Schlitzes bewirkt. Von diesen Werkzeugen können nur schmale Band-, Stich- und Laubsägen verwendet werden, um in Werkstücken gekrümmte Schnitte durchzuführen. Bei kleinen Krümmungsradien ist es mit hin- und hergehenden Sägen oder Bandsägen schwierig, Schnitte mit stetiger Krümmung durchzuführen. Bei Laub- und Bandsägen ist die Grösse des zu bearbeitenden Werkstücks durch den Laubsägenbügel bzw. den Rücklauf des Sägebandes beschränkt. Ferner können von den genannten Werkzeugen nur Kreissägen zum Schneiden von geraden Nuten verwendet werden. Hinsichtlich der Gefahr für den Benützer stehen Kreissägen aber an erster Stelle, und diese Gefahr ist bei der Bearbeitung kleiner Werkstücke besonders gross.

Es ist weiter bekannt, mit Fräswerkzeugen und aufwendigen Werkzeug- und/oder Werkstückführungs- und Spanneinrichtungen gerade oder gekrümmte Konturen, Schlitze oder Nuten an Werkstücken zu fräsen, wobei die die Zerspanung bewirkenden Kräfte des Fräsers vorwiegend in Umfangsrichtung desselben auf das Werkstück wirken, das damit quer zur Achse des Fräsers wirkenden Kräften ausgesetzt ist, die eine feste Einspannung des Werkstückes bzw. bei sehr geringer Festigkeit des zu bearbeitenden Werkstoffs zumindest eine feste Führung mit einem Anschlag oder dgl. erfordern. Nur bei sehr hohen Drehzahlen der Werkzeuge, wie z. B. bei Oberfräsen für die Holzbearbeitung ist u. U. ein freihändiger Schnitt möglich, was aber neben der grossen Unfallgefahr, der mit aufwendigen Schutzvorrichtungen begegnet werden muss, beträchtlichen Lärm verursacht und infolge des pro Werkzeugumdrehung sehr geringen Vorschubs zu starker Staubbildung führt.

Die Bearbeitung von Kunststoffen, insbesondere Thermoplasten, stellt an die Geräte und Werkzeuge besondere Anforderungen hinsichtlich Schnittgeschwindigkeit, Zerspanungseigenschaften, Vorschub etc., so dass selten mit gleicher Ausrüstung zufriedenstellende Ergebnisse bei sowohl Holz, wie auch Kunststoff erzielt werden. Beim Sägen sind rauhe Oberflächen nicht zu vermeiden und nachträgliche Glättung, entweder in mühseliger Handarbeit oder auf einer dafür geeigneten Maschine ist erforderlich. Konturen komplizierter Formgebung bringen besonders grosse Probleme mit sich. Die bekannten, hochtourigen Geräte zum Hobeln von Holz können für Kunststoff nur in seltenen Fällen eingesetzt werden und kommen für Metalle auch sehr geringer Festigkeit nicht in Frage. Darüberhinaus können damit nur gerade oder leicht gewölbte Flächen bearbeitet werden. Auch diese Geräte, ob als Hand- oder als Tischausführung, sind in der Handhabung umso gefährlicher, je kleiner das Werkstück ist.

Der allgemeinen Forderung des eingangs genannten Benützerkreises nach höchstmöglicher Präzision bei der Bearbeitung von Werkstücken aus verschiedenen Werkstoffen können nur wenige Spezialgeräte gerecht werden. Das Aussägen eines genauen Kreises oder Kreissegmentes auf einer Band- oder Laubsäge innerhalb von Toleranzen, die im Bereich von plus/minus 1/10 mm liegen, ist nicht möglich, abgesehen von der Notwendigkeit der Glättung der Schnittfläche, selbst wenn man sich der im Angebot befindlichen Zusatzeinrichtungen bedient. Auch die Anfertigung kleiner Leisten oder ähnlicher Teile mit Breiten- und Dickentoleranzen obengenannter Grössenordnung, sowohl aus Holz als auch aus Kunststoff, ist nur unter Verwendung einer Fräsmaschine möglich. Gleiches trifft für die sonstige Konturenbearbeitung, Nutungen u.v.A.m. zu.

Es ist eine Drehstabsäge der eingangs beschriebenen gattungsmässigen Art bekannt (US-PS 37 04 517), bei deren Werkzeug die entlang einer wendelförmig um dessen Umfang verlaufenden Linie liegenden Schneidelemente mit ihren Spitzen auf dieser Linie liegende Zähne sind. Die Zähne zerspanen ausschliesslich in Umfangsrichtung, d. h. die gesamte Zerspankraft wirkt rechtwinklig zur Vorschubrichtung. Dadurch werden sehr starke seitliche Kräfte zwischen Werkzeug und Werkstück übertragen, die eine genaue Führung, insbesondere bei Vorschub von Hand unmöglich machen. Auch wirkt die gesamte Zerspankraft als Drehmoment auf das Werkzeug. Diese Drehkraft überträgt sich zwangsläufig auf das Werkstück, so dass dieses zum Schlagen neigt.

Es ist die der Erfindung zugrunde liegende Aufgabe, diese bekannte Stichsäge so weiterzubilden, dass im wesentlichen die gesamte Zerspankraft axial zum Werkzeug wirkt, und die quer zur Werkzeuglängsachse wirkenden Kräfte vernachlässigbar gering sind.

Diese Aufgabe wird gemäss der Erfindung dadurch gelöst, dass als Schneidelement der eine Schneidkante bildende Spitzenbereich einer schraubenförmig um den Umfang des Werkzeugs verlaufenden vorspringenden Rippe ausgebildet ist, und die Rippe ein- oder mehrgängig durchgehend wendelförmig mit einer Steigung zwischen 5° und 15° gegen eine senkrecht zur Werkzeuglängsachse liegende Ebene um den Umfang durchlaufend so ausgebildet ist, dass die Schneide auf geradlinigen Mantellinien liegt.

Durch diese erfindungsgemässe Ausbildung wird in dem an jedem Punkt der durchgehenden Schneide wirkenden Kräfteparallelogramm durch die geringe Steigung die Axialkomponente sehr gross und die Radialkomponente sehr klein. Dadurch wird im wesentlichen die gesamte Zerspankraft vom Arbeitstisch aufgenommen, so dass zwischen Werkzeug und Werkstück keine wesentlichen seitlichen Kräfte wirken. Daher ist eine sehr genaue Führung beim Vorschub möglich. Durch die durchgehende Schneide kann auch mit einer relativ geringen Drehzahl ein zufriedenstellender Vorschub erreicht werden, wodurch andererseits ein sehr ruhiger Lauf und eine geringe Geräuschentwicklung erreicht wird.

Es ist ein Fräser bekannt (DE-PS 6 35 172), bei welchem die wendelförmig um den Umfang verlaufende Schneide mit einer Steigung kleiner als 30° verläuft. Bei diesem bekannten Fräser handelt es sich jedoch um einen Stirnfräser. Bei diesem Fräser muss der wesentliche Teil der Zerspankraft in Umfangsrichtung wirken, da er mit einem Morsekonus im Futter eingesteckt ist und bei zu stark in Achsrichtung gerichteter Zerspankraft infolge einer zu geringen Steigung der Schneide der Konus aus dem Fräser ausgezogen werden würde.

Die bei der erfindungsgemässen Stichsäge für den Vorschub zu erbringende Kraft ist gering, da sie, abgesehen von der jeweiligen Materialfestigkeit, durch den Querschnitt der zu zerspanenden Fläche bestimmt, welche sich aus der Dicke des Werkstücks und dem Durchmesser des Werkzeugs ergibt. Da der Werkzeugdurchmesser infolge der sehr geringen auf Biegung wirkenden seitlichen Kräfte klein gehalten werden kann, vorzugsweise maximal 6 mm, wird insbesondere bei Trennarbeiten neben der geringstmöglichen aufzuwendenden Vorschubkraft auch der Materialverschnitt auf ein Minimum reduziert.

Als Werkstoff für das Werkzeug wird Hartmetall bevorzugt. Es wurde gefunden, dass mit Hartmetallwerkzeugen und Durchmessern zwischen 2,5 mm und 6 mm und einer Schneidensteigung von unter 2 mm, z. B. 1,8 mm bei einem Vorschub von 0,1 mm pro Werkzeugumdrehung beste Ergebnisse erzielt werden. Eine Wendelsteigung von 1,8 mm gewährleistet, dass beim Bearbeiten von dünnen Werkstücken, z. B. Blechen, immer eine Werkzeugschneide im Eingriff mit dem Werkstück ist und dadurch ein stoss- und ruckfreier Schnitt erreicht wird. Im einzelnen wurde gefunden, dass folgende Materialdicken ohne Gefahr eines Werkzeugbruches durchtrennt werden können

| Werkzeug — Durchmesser mm | 2,5 | 3,0 | 4,0 | 5,0 | 6,0 |
|---|---|---|---|---|---|
| Materialdicke ca. mm | 5 | 8 | 13 | 25 | 40 |

Diese Werte beziehen sich auf Hölzer (z. B. Fichte, Kiefer, Lärche, Buche, Eiche) Hartfaserplatten, Sperrhölzer verschiedener Qualität, sowie Kunststoffe (z. B. Hart-PVC).

Da die oben angeführten Werkzeuge eine einheitliche Wendelsteigung von 1,8 mm hatten, hatten die Steigungswinkel folgende Werte

| Werkzeug — Durchmesser mm | 2,5 | 3,0 | 4,0 | 5,0 | 6,0 |
|---|---|---|---|---|---|
| Steigungswinkel etwa | 12°40' | 11° | 8° | 6°30' | 5°30' |

Es wurde die schnittkraftbedingte seitliche Abtrift eines Werkstücks bei Verwendung eines Werkzeuges nach der Erfindung mit 4 mm Durchmesser und 1,8 mm Steigung, was einem Steigungswinkel von ca. 8° entspricht, im Verhältnis zu der Abtrift bei Verwendung bekannter Fräswerkzeuge ermittelt. Unter Abtrift wird dabei die senkrecht zur Werkzeugachse auf das Werkstück übertragene Kraft ermittelt. Gegenüber einem herkömmlichen Fräser mit einem Steigungswinkel von 45° beträgt die Abtrift eines Werkstücks bei Bearbeitung mit einem Werkzeug nach der Erfindung nur 15 bis 20 %. Daraus wird deutlich, daß mit dem erfindungsgemäßen Werkzeug freihändige Schnitte mit nahezu vernachlässigbarem Kraftaufwand für die Positionierung durchzuführen sind, im Vergleich zu einer Bearbeitung von Werkstücken mit herkömmlichen Fräswerkzeugen.

Für das Ausschneiden von Figuren und sonstigen Teilen aus Sperrholz bis ca. 6 mm Dicke, wie z. B. bedruckter Vorlagen für den Modellbau eignet sich vorzüglich ein Werkzeug nach der Erfindung mit ca. 2,5 mm Durchmesser und einer Steigung von 1,8 mm, wogegen für allgemeine Verwendung und Schnitte ins Volle bis ca. 25 mm Materialdicke ein Werkzeug von 5 mm Durchmesser und ca. 30 mm Arbeitslänge bestens geeignet ist.

Ein erfindungsgemäßes Werkzeug für universelle Verwendung, bei dem die Bruchgefahr nahezu ausgeschlossen ist, so daß auch Werkstücke bis ca. 40 mm Dicke bei reduzierter Vorschubgeschwindigkeit geschnitten werden können, stellt eine konische Ausführungsform dar, die beispielsweise am Schaft 6 mm Durchmesser und am oberen Ende 2 mm Durchmesser aufweist. Bei weit in die Hohlspindel des Antriebsaggregates zurückgezogenem Werkzeug können dünne Platten mit geringstem Verschnitt getrennt werden, da nur mit der dünnen Werkzeugspitze gearbeitet wird. Bei dicken Werkstücken muß im oberen Werkzeugbereich erheblich weniger Material zerspant werden als im unteren, wodurch die Belastung des Werkzeuges und zugleich die nötige Vorschubkraft verringert wird. Auch ein solches Werkzeug ist vorzugsweise mit einer Steigung von weniger als 2 mm, beispielsweise 1,8 mm zu versehen. Um eine schräge Schnittkante zu vermeiden, kann die Spindel des Gerätes um den entsprechenden Winkel geneigt werden, dann entsteht eine schräge Schnittfläche nur abfallseitig.

Die auf den Tisch wirkende Schnittkraft hat bei der erfindungsgemäßen Wendel mit kleiner Steigung den Vorteil, daß ein ungewolltes Abheben des Werkstücks während der Bearbeitung verhindert wird. Ferner läßt sich diese Eigenschaft vorteilhaft dazu ausnützen, geometrisch einwandfrei gerade Schnitte zu erzielen. Dies kann beispielsweise dadurch erreicht werden, daß eine mit einem rauhen Belag versehene Werkstückauflage auf dem Tisch geradlinig verschiebbar angeordnet wird und das Werkstück entsprechend der gewünschten Schnittrichtung darauf ausgerichtet, mit einer Hand niedergedrückt und dem Werkzeug zugeführt wird. Beim Schnitt wird das Werkstück mit nahezu der gesamten Schnittkraft gegen die Unterlage gedrückt und weicht seitlich nicht aus, unabhängig davon, ob ein Trennvorgang stattfindet oder nur eine Glättung bzw. Nachfräsung vorgenommen wird.

Bei dem Gerät nach der Erfindung ist die Werkstückstütze vorzugsweise ein ebener Tisch. Gegebenenfalls kann der Winkel zwischen der Schneckenachse und der Hauptebene des Tisches durch Verschwenken des Werkzeuges oder des Tisches verändert werden. Der Tisch hat eine Bohrung, durch die das freie Ende der Schnecke, gegebenenfalls verstellbar weit, herausragt.

Das Werkstück läßt sich leicht in jede Schnittrichtung führen, da die seitliche Abtrift sehr gering ist, wobei es im Gegensatz zu Schnitten mit Band- oder Laubsägen nicht notwendig ist, das Werkstück entsprechend dem Schnittverlauf zu verdrehen, da die Schnecke allseitig die gleiche Schnittwirkung hat, so daß das Werkstück nur in der X-Y Achse bewegt werden muß. Das Werkstück kann beliebig lang und breit sein, es wird durch keinen Ausleger oder dergleichen, wie z. B. bei einer Laubsäge, behindert.

Die durch den schabeartigen Schnitt der Wendel nach der Erfindung bedingte hohe Oberflächengüte der bearbeiteten Fläche macht auch nach einem Schnitt ins Volle, d. h. nach einem Trennvorgang vergleichbar dem Absägen, jedes Nacharbeiten überflüssig, läßt aber Maßkorrekturen — bei Vorhandensein geeigneter Hilfsvorrichtung — auch in kleinsten Größenordnungen bis zu wenigen hundertstel Millimeter zu. Bei Schnitten entlang eines Führungslineals bzw. Anschlages oder bei Kreisschnitten um einen feststehenden Zapfen können Genauigkeiten erreicht werden, die sonst nur mit Geräten bzw. Maschinen der Metallverarbeitung erzielt werden, da die Wendel im Vergleich zu einer Band- oder Laubsäge wesentlich starrer ist und auch bei wechselnden Schnittbedingungen wie z. B. Härtedifferenzen innerhalb eines Werkstücks, bei Holz auch Faserverlauf, Vorschubdifferenzen etc. kaum ausweicht.

Ein besonderer Vorteil der erfindungsgemäßen Wendel mit kleiner Steigung liegt darin, daß sie sich im Gegensatz zu Fräsern und Sägen im Werkstück nicht fangen kann, da die Schneidwirkung nicht unterbrochen, sondern kontinuierlich ist, so daß auch bei plötzlichem oder stoßartigem Heranführen des Werkstücks an das Werkzeug keine Gefahr für den Bedienenden entstehen kann. Erst wenn Druck auf das Werkstück in Richtung zur Wendel ausgeübt wird, setzt der Schnittvorgang ein, so daß ein außerordentlich feinfühliges Nachschneiden von Konturen ebenso wie das Stillsetzen und Wiedereinschalten des Gerätes im Eingriff ohne jegliche Gefahr möglich sind.

Sofern die Wendel aus dem Tisch weiter herausragt, als durch die Materialdicke erforderlich, kann die Überlänge durch eine aufgesteckte Schutzkappe abgedeckt und somit die Gefahr einer Schnittverletzung beim etwaigen Abrutschen während des Handvorschubs weitgehend ausgeschlossen werden.

Das Werkzeug nach der Erfindung vereinigt in sich die Möglichkeiten, die bisher mit verschiedenen Arten von Sägen und Fräseinrichtungen gegeben waren, ohne die Nachteile dieser bekannten Werkzeuge zu haben. Sofern eine Werkstückführung erforderlich ist, z. B. für Gerad- oder Kreisschnitte, kann sie sehr einfach gestaltet werden.

Wird das erfindungsgemäße Werkzeug zum Fräsen oder zum Ausschneiden von Figuren aus Platten nach Schablonen verwendet, kann sich am freien Ende der Wendel oder an irgendeiner anderen Stelle eine schneidenfreie Zone befinden, mit der das Werkzeug in oder entlang einer Schablone geführt werden kann.

Das bisher Gesagte gilt auch sinngemäß im Fall der stationären Anordnung des Werkstücks, wenn das in einer geeigneten Handhabe befindliche erfindungsgemäße Werkzeug relativ zum Werkstück bewegt wird.

Anhand der Figuren wird die Erfindung näher erläutert.

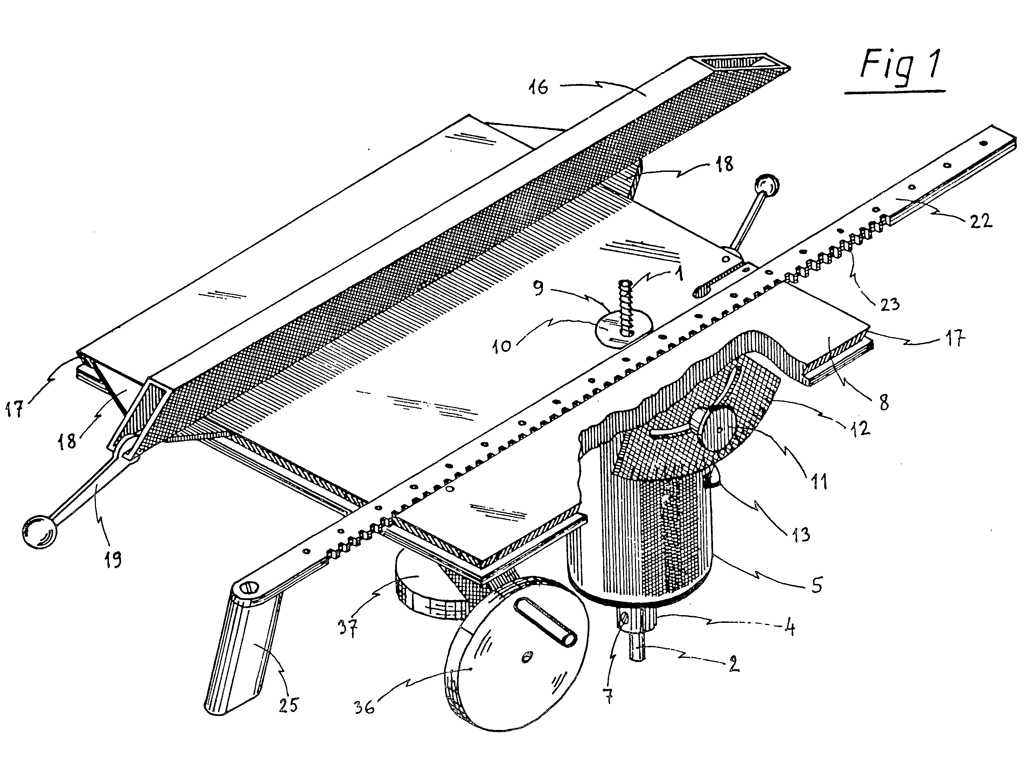

Figur 1 zeigt eine Ausführungsform eines Gerätes nach der Erfindung in perspektivischer Ansicht.

Figur 2 zeigt das in Fig. 1 dargestellte Gerät in Seitenansicht mit schräggestelltem Werkzeug.

Figur 3 zeigt einen Teilschnitt durch das Gerät im Bereich des Antriebsaggregats.

Figuren 4a bis 4c zeigen die Anordnung einer magnetischen Haltevorrichtung und einer Klemmvorrichtung für die Führungsstange und die Funktion der Vorschubeinrichtung des in den Figuren 1 bis 3 dargestellten Gerätes.

Figuren 5a und 5b zeigen im Schnitt diese Vorschubeinrichtung nach der Figur 4a.

Figur 6 zeigt den Tisch des Gerätes mit Anschlag und schräggestelltem Werkzeug.

Figur 7 zeigt das Gerät in perspektivischer Ansicht, mit einem auf dem Gerätetisch verschiebbaren Rauhbelag und darauf montierter Visierhilfe und Stützvorrichtung.

0 024 251

Figur 8 zeigt in Vergrößerung das erfindungsgemäße Werkzeug in einem Schnitt durch einen Ausschnitt des Gerätetisches und der Platte mit Rauhbelag.

Figur 9 zeigt in perspektivischer Ansicht ein auf der Führungsschiene des Gerätes montierbares Prisma zum Ausfräsen von zentrischen Öffnungen in kreisrunden Werkstücken.

Figur 10 zeigt ein Werkzeug nach der Erfindung zum Ausschneiden von Figuren nach Schablonen in einem Teilschnitt.

Figur 11 zeigt eine auf der Führungsschiene des Gerätes montierbare Schleppreinrichtung zum Fräsen von geschweiften Konturen in dicken Werkstücken.

Figur 12 zeigt in perspekt. Ansicht auf das Gerät eine Vorrichtung zum Abschrägen der Kanten von kreisrunden Platten.

Figur 13 zeigt eine Ausführungsform des erfindungsgemäßen Werkzeugs mit konischer Wendel.

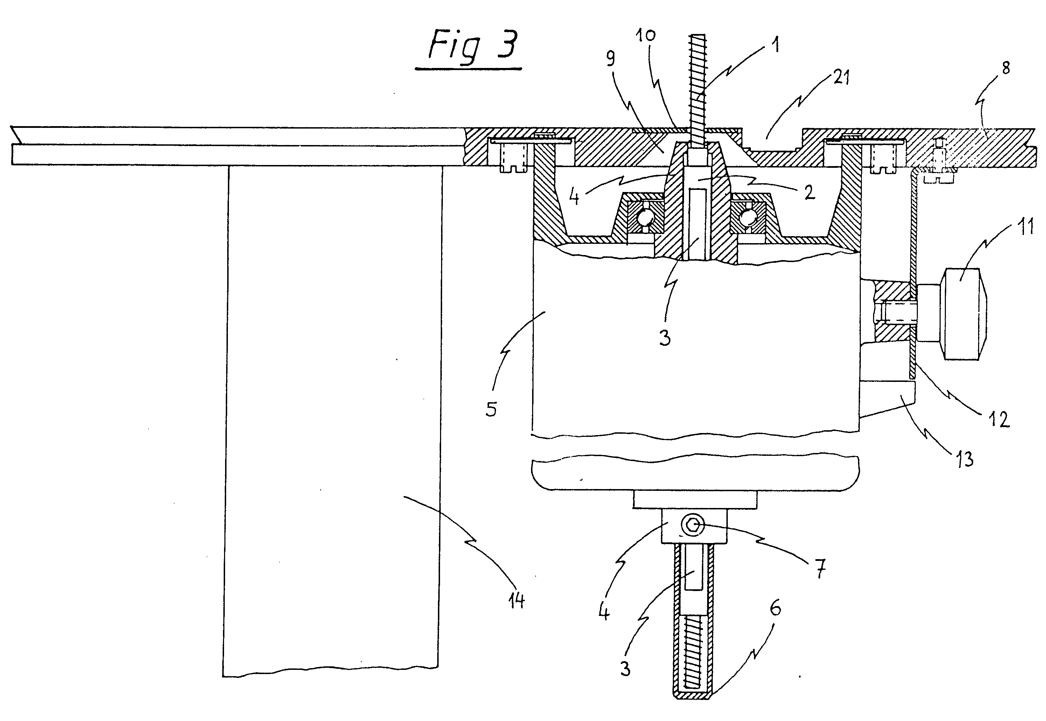

Bei dem dargestellten Gerät nach der Erfindung ist das Werkzeug 1 mit der Wendel geringer Steigung fest (durch Verkleben, Löten, Einpressen, Verschrauben) vorzugsweise in einen Schaft 2 eingebettet, dessen Durchmesser nicht weniger als 7 mm beträgt, und der länger ist als die als Hohlspindel ausgebildete Welle 4 des Antriebsmotors 5. Gegebenenfalls kann sich am anderen Ende des Schaftes 2 ein weiteres Werkzeug befinden, welches durch eine Schutzkappe 6 gesichert wird (Fig. 3). Am unteren Ende der Motorwelle 4 befindet sich eine Klemmschraube 7, mit welcher der Schaft festgeklemmt und damit sowohl axial als auch gegen Verdrehung gesichert wird. Um eine ausreichende Klemmung ohne Beschädigung der Oberfläche des Schaftes zu gewährleisten, sind in den in Frage kommenden Bereichen des Schaftes Abflachungen 3 vorgesehen (Figur 3).

Das Werkzeug 1 ragt aus dem Tisch 8 beliebig einstellbar weit heraus, wobei die relativ große Öffnung 9 im Tisch 8 durch auswechselbare, dem jeweiligen Werkzeugdurchmesser entsprechende Einlegeplatten 10 so verdeckt wird, daß vorzugsweise ein Spalt von nur wenigen Zehntel mm zwischen Bohrung der Einlegeplatte und dem Werkzeug entsteht, um beim Schneiden von weicheren Hölzern und insbesondere Sperrholz, Ausbrüche zu vermeiden.

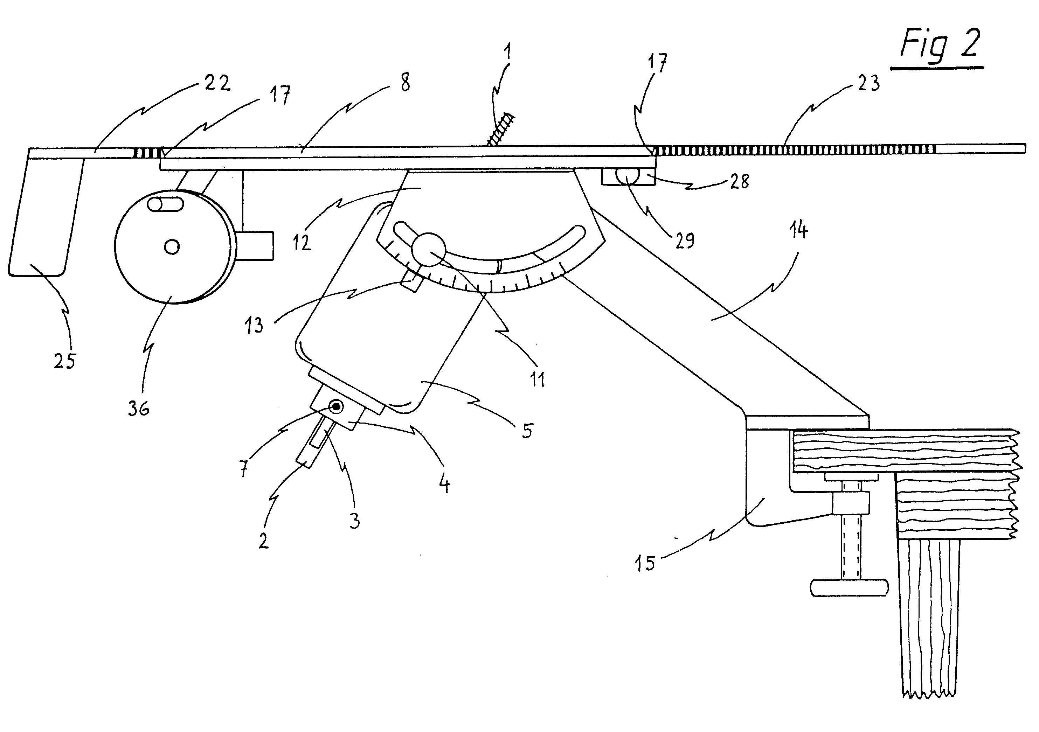

Der unter dem Tisch 8 verschwenkbar aufgehängte Motor, der zwecks geringstmöglicher Geräuschentwicklung und Minimum an Verschleiß und somit Störanfälligkeit vorzugsweise als zweipoliger Induktionsmotor mit z. B. 2 800 U/min. ausgebildet sein sollte, kann nach vorne und hinten um jeweils ca. 45° geschwenkt und in jeder Lage fixiert werden, indem die Rändelmutter 11 gelöst und nach erfolgter Einstellung, die am Skalenblech 12 in Winkelgraden abgelesen werden kann, wieder fest angezogen wird. Eine am Motorgehäuse angebrachte Markierung 13 erleichtert die Einstellung bzw. Ablesung. Der Tisch 8 ist mit einem aus Fig. 2 ersichtlichen Träger 14 fest verbunden, an dem sich die Klemmvorrichtung 15 befindet, mit der das Gerät z. B. an einer Werkbank befestigt werden kann.

Das Werkzeug dreht sich vorzugsweise, bezogen auf die Draufsicht, im Uhrzeigersinn und erzeugt demzufolge eine Abtrift des von vorne an das Werkzeug herangeführten Werkstücks nach links, so daß der Anschlag, wenn er notwendig ist, links vom Werkzeug anzubringen ist. Aus diesem Grunde ist das Werkzeug nicht in Tischmitte, sondern seitlich angeordnet.

Das Format des Tisches 8 ist vorzugsweise quadratisch, um den am Tischrand festklemmbaren Anschlag 16 sowohl längs als auch quer verwenden zu können. Zu diesem Zweck ist der Tischrand rundum mit einer Schräge 17 versehen, in die die entsprechend profilierten Klemmleisten 18 des Anschlags 16 eingreifen. Durch Betätigung des Exzenterhebels 19 wird eine der Klemmleisten 18 gegen die schräge Kante 17 des Tisches 8 gepreßt, wobei durch die Verkeilung der Anschlag 16 zuverlässig in der gewählten Position festgehalten wird. Bei entspanntem Exzenterhebel 19 weicht die vordere Klemmleiste 18 so weit zurück, daß der Anschlag vom Tisch abgehoben werden kann und nicht seitlich entlang des Tisches abgestreift werden muß.

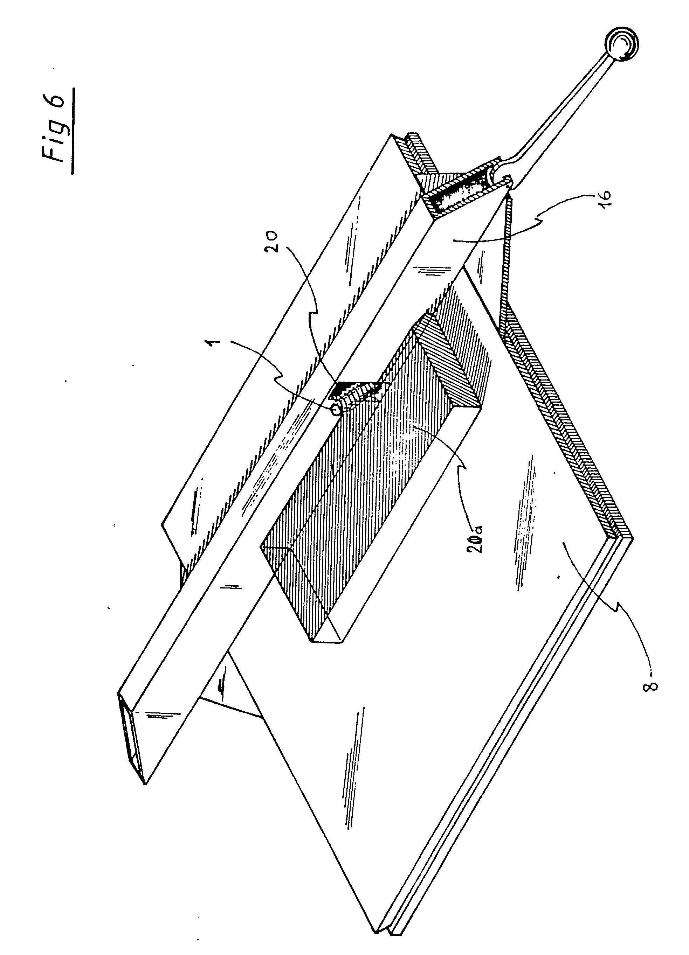

Wie in Fig. 6 dargestellt, hat der Anschlag 16 auf einer Seite eine Aussparung 20, deren Höhe und Breite so bemessen sind, daß das Werkzeug in Schrägstellung teilweise darin verschwindet, wenn der Anschlag quer zum Tisch aufgesetzt und entsprechend weit über das Werkzeug geschoben wird. In dieser Einstellung können Kanten von Werkstücken 20a in beliebigen Winkeln zwischen 0 und 45° beschnitten werden.

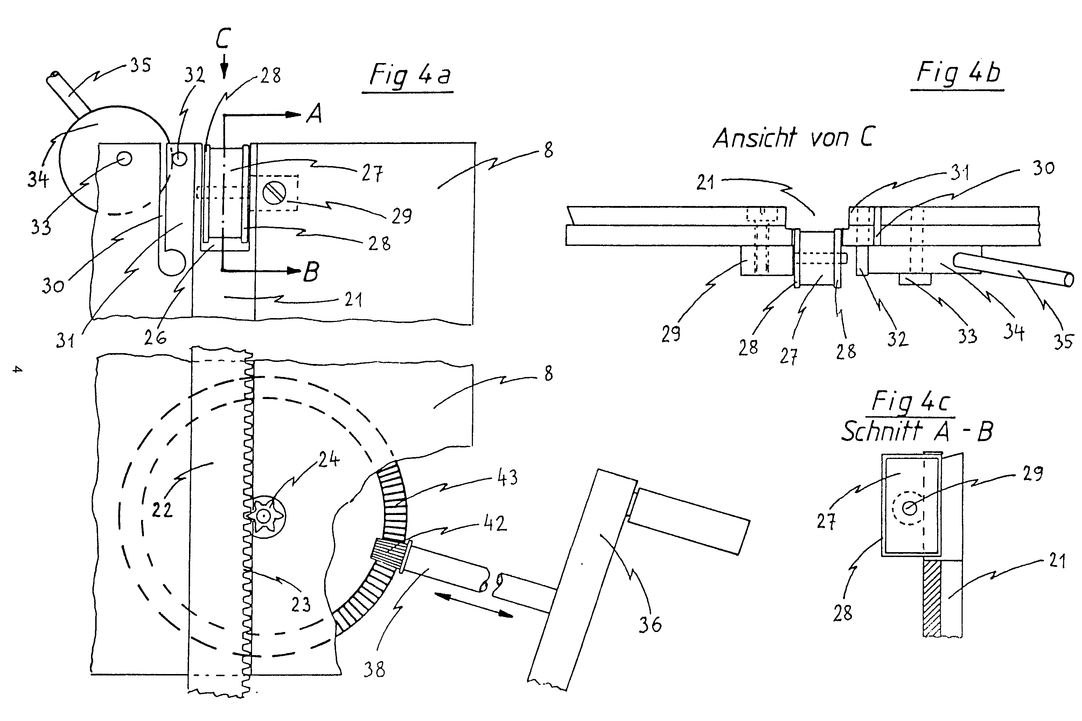

Im Tisch 8 befindet sich eine durchgehende Nut 21 (Fig. 3, Fig. 4a), in der eine herausnehmbare Führungsschiene 22 mit leichtem Spiel gleitet. Die Führungsschiene ist als Zahnstange ausgebildet. Die Verzahnung 23 steht mit einem unter der Tischoberfläche verdeckt liegenden, in die Nut 21 hineinragendem Ritzel 24 in Eingriff, welches von einem Vorschubgetriebe betätigt wird. Die Führungsschiene 22 ist mit einer Anzahl Bohrungen mit und/oder ohne Gewinde versehen, die der Aufnahme von Hilfsvorrichtungen dienen, und mit einem Handgriff 25 ausgestattet, um auch ohne Vorschubgetriebe verwendet werden zu können. Um zu verhindern, daß die Führungsschiene 22 aus der Nut 21 herauskippt, befindet sich, wie in den Figuren 4a bis 4c dargestellt, am Ende der Nut im Tisch eine Aussparung 26, in der ein Magnetsystem, bestehend aus einem Magneten 27 und den Polplatten 28, sowie dem Zapfen 29, pendelnd angeordnet ist. Die pendelnde Aufhängung des Magnetsystems ermöglicht das Anheben der Führungsstange im vorderen Teil des Tisches, um deren Verzahnung aus dem Eingriff mit dem Ritzel 24 zu bringen, was wünschenswert ist, wenn eine rasche Veränderung der Lage der Schiene ohne Ausschaltung des Vorschubgetriebes notwendig wird. In diesem Fall haftet das Magnetsystem an der schrägstehenden Führungsstange ebenso zuverlässig wie in der abgesenkten Lage.

Eine ähnliche Wirkung kann auch mit einer V-förmigen oder halbrunden Nut in der Führungsschiene und einer gefederten Kugel am Ende der Nut 21 im Tisch 8, die in die Nut der Führungsstange 22 eingreift, erreicht werden, jedoch wird die magnetische Vorrichtung, da sie verschleißarm und zuverlässiger ist, bevorzugt.

Um die Führungsstange 22 in jeder beliebigen Lage fixieren zu können, ist am Tischende eine Exzenter-Klemmvorrichtung angebracht. Neben der Aussparung 26 befindet sich eine weitere Aussparung 30 in dem Tisch 8. Der dazwischenliegende Teil 31 des Tisches 8 wird als Klemmbacke benützt, indem ein in diesem befindlicher, nach unten gemäß Fig. 4b herausragender Stift 32 von einem Exzenter 34 beaufschlagt wird und seine Lage und sowie auch die Lage der Klemmbacke 31, verändert, was ein Festklemmen der Führungsschiene 22 in der Nut ermöglicht. Der Exzenter 34 ist im Tisch 8 mittels eines Bolzenz 33 drehbar gelagert und wird mit dem Handgriff 35 betätigt.

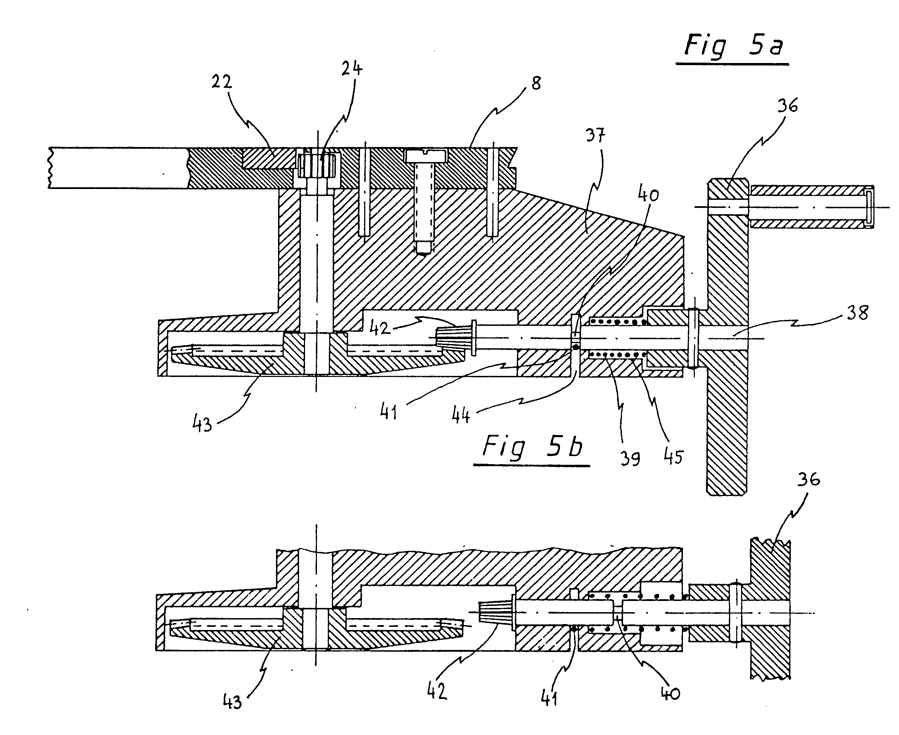

Das Vorschubgetriebe (Figuren 4a und 5) wird durch eine ein- und ausrückbare Kurbel 36 betätigt, wobei die Zahnräder des Getriebes so angeordnet sind, daß die Rechtsdrehung der Kurbel eine Vorwärtsbewegung der Führungsstange 22 bewirkt, und die Übersetzung so bemessen ist, daß eine Umdrehung der Kurbel einem Vorschub von ca. 1 mm entspricht. Die im Getriebekörper 37 gelagerte, in Axialrichtung verschiebbare Welle 38, deren eines Ende als Kegelritzel 42 ausgebildet ist, ist am anderen Ende fest mit der Kurbel verbunden. In einer Vertiefung 45 des Getriebekörpers 37 befindet sich eine Druckfeder 39, die gegen den Ansatz der Kurbel 36 drückt. Die Welle 38 ist mit einem Einstich 40 versehen, in den ein in einem Schlitz 44 des Getriebekörpers geführter, federnder Drahtbügel 41 einrastet und somit die Welle axial fixiert, ohne deren Drehbarkeit zu beeinträchtigen. In dieser Lage greift das Ritzel 42 in das Kegelrad 43 ein, welches fest mit dem Ritzel 24 verbunden ist, das in die Verzahlung 23 der Führungsstange 22 eingreift. Wenn der federnde Drahtbügel 41 von Hand nach unten gedrückt wird und aus dem Einstich der Welle 38 freikommt, bewirkt die Druckfeder 39, daß die Kurbel 36 mit der Welle 38 axial verschoben wird und somit das Kegelritzel 42 außer Eingriff mit dem Kegelrad 43 kommt. In diesem Zustand kann die Führungsstange von Hand verschoben werden, ohne daß die relativ hoch übersetzte Kurbel mitgedreht wird. Das Hineindrücken der Kurbel bis zum Einrasten des federnden Drahtbügels 41 in den Einstich 40 der Welle 38 bringt die Kegelräder in korrekten Eingriff. Der Getriebekörper 37 ist so ausgebildet, daß er die Zahnräder und sonstige funktionswichtige Teile des Getriebesvor Späneflug und Beschädigung schützt, indem sein unterer Teil topfartig ausgebildet ist und die Zahnräder vollständig verdeckt. Ferner ist er abnehmbar ausgebildet und wird vorzugsweise mit einer Schraube und zwei Zentrierstiften am Tisch 8 befestigt.

Nachstehend sind einige Hilfsvorrichtungen dargestellt, die in Verbindung mit der Führungsstange 22 bzw. dem Anschlag 16 die Durchführung einer Vielzahl von besonderen Arbeiten ermöglichen.

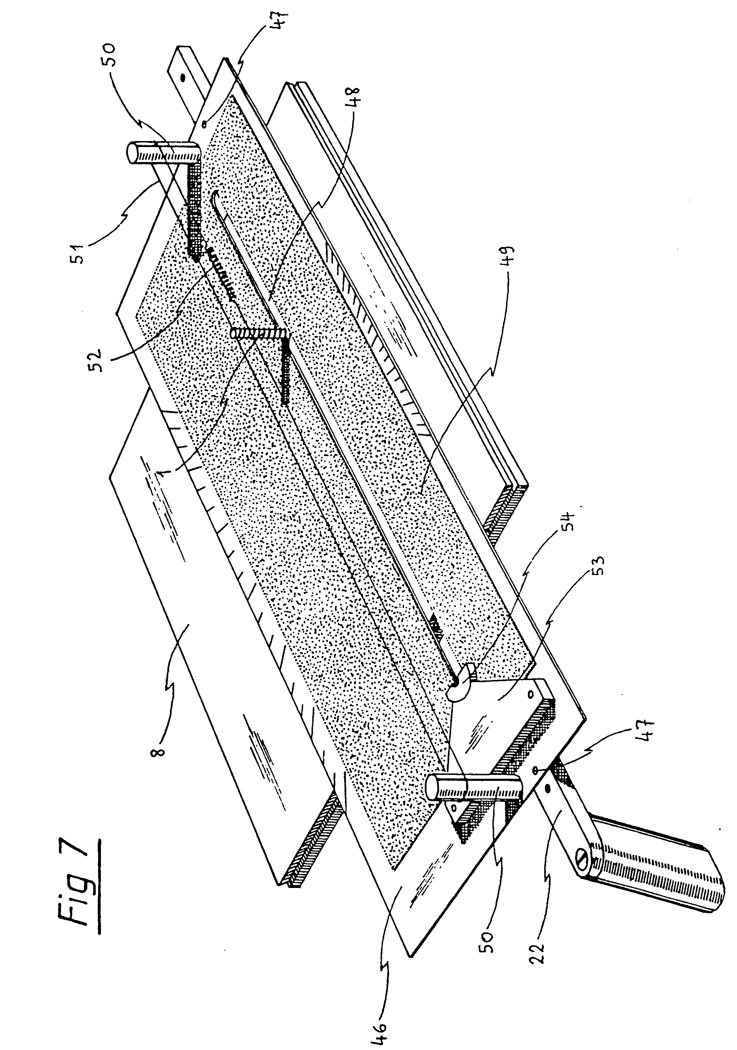

Fig. 7 zeigt eine Einrichtung, die unter Ausnützung der besonderen Eigenschaften des erfindungsgemäßen Werkzeuges eine schelle und präzise Durchführung von einwandfreien geometrisch geraden Schnitten ermöglicht. Die Einrichtung besteht aus einer Platte 46, vorzugsweise aus Blech, die mittels zweier Zapfen 47, welche sich auf der Unterseite der Platte befinden und in korrespondierende Bohrungen der Führungsschiene 22 eingreifen, auf dieser durch einfaches Aufstecken befestigen läßt. Die Platte 46 ist mit einer Längsnut 48 versehen, die so angeordnet ist, daß das Werkzeug 1 durch diese hindurchragt und deren seitliche Begrenzungsflächen nicht berührt. Vorzugsweise ist die Nut 0,2 bis 0,3 mm breiter als der Durchmesser des Werkzeuges.

Die Länge der Platte und der Nut sind vorzugsweise so zu bemessen, daß die Länge des Arbeitswegs der Länge des Arbeitsweges der Führungsschiene entspricht.

Die Platte ist, bis auf einen Rand von ca. 1 cm rechts und links und etwas größeren Rändern vorne und hinten, mit einem Rauhbelag 49 versehen. Dieser kann aus aufgeklebtem Schmirgelleinen oder -papier, aus einer direkt aufgetragenen Korundkörnung oder ähnlichem bestehen, oder durch mechanische Behandlung der Plattenoberfläche nach Art des Behauens von Feilen entstehen. Am rechten und linken Rand der Platte sind Strichmarkierungen vorhanden, die eine Winkeleinteilung darstellen und es ermöglichen, Werkstücke für Gehrungsschnitte nach diesen ohne Zuhilfenahme von Meßgeräten auszurichten.

Um mit Anrissen versehene Werkstücke mit größmöglicher Genauigkeit nach der gewünschten Schnittlinie ausrichten zu können, befinden sich an beiden Enden der Platte 46 zwei abschraubbare Säulen 50, um die ein dünner Draht 51 geschlungen ist. Dieser wird von der Zugfeder 52 in Spannung gehalten und bildet entlang der linken Kante der Nut 48, genau über der effektiven Schnittlinie des Werkzeuges eine gerade Visierlinie, deren Höhenlage durch Verschieben auf den Säulen 50 beliebig verändert und der Werkstückdicke angepaßt werden kann, so daß Parallaxenfehler vermieden werden. Statt des Drahtes kann auch ein Lineal an die Säulen 50 angelegt werden, während es auf dem Werkstück aufliegt.

Die Säulen 50 sind abnehmbar, um bei der Bearbeitung von Werkstücken, die größer als die Platte sind, nicht hinderlich zu sein.

Die vom Werkzeug auf das Werkstück übertragene vertikale Schnittkraft preßt letzteres so stark gegen den Rauhbelag, daß normalerweise ein leichtes Andrücken mit einer Hand genügt, um einen Schnitt ins Volle bei Werkstoffen mittlerer Festigkeit durchzuführen. Um bei Teilen aus härteren Werkstoffen ein Rutschen in Schnittrichtung zu verhindern, kann am vorderen Ende der Platte 46 in dafür vorgesehenen Bohrungen ein Stützaufsatz 53 befestigt sein, der auf der dem Werkzeug zugewandten Seite einen schwenkbaren Backen 54 aufnimmt, an dem ein Werkstück in beliebiger Winkellage abgestützt werden kann.

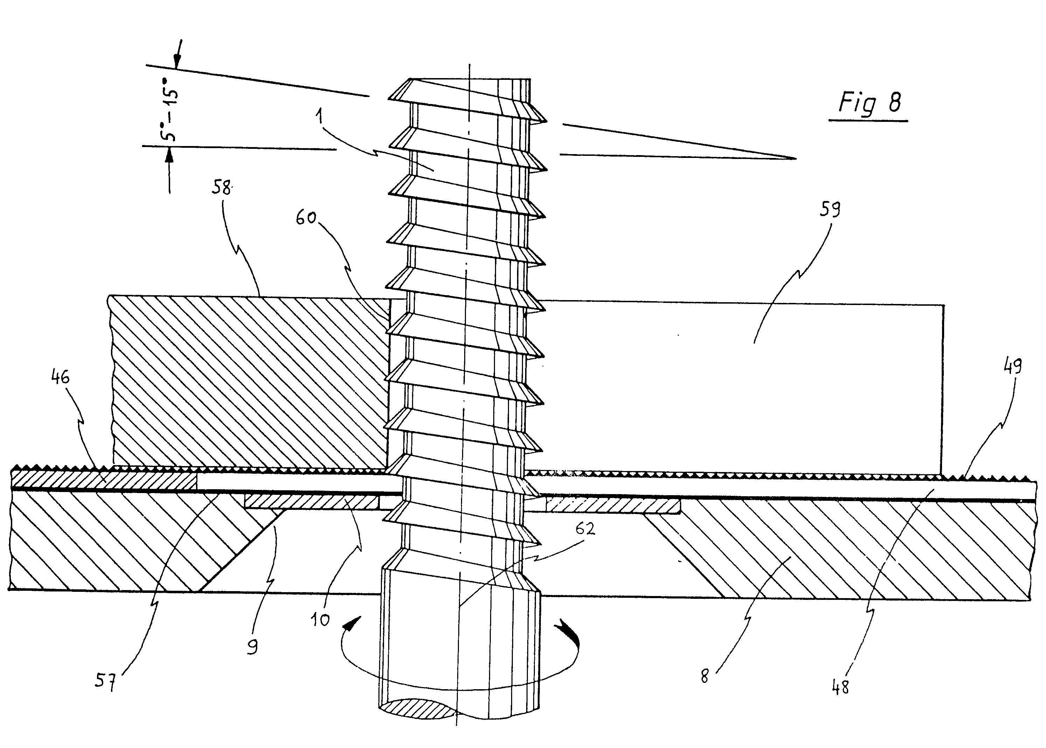

Um die durch die Schnittkraft bedingte Reibung zwischen Tisch 8 und Platte 46 zu verringern, insbesondere wenn beide Teile aus Metall gefertigt sind, kann die Unterseite der Platte gemäß Fig. 8 oder der Tisch mit einem reibungsmindernden Belag versehen sein, so z. B. die Platte mit Teflon beschichtet sein, wodurch auch Kratzerbildung vermieden wird.

Fig. 8 zeigt in stark vergrößertem Schnitt die Anordnung des Werkzeuges zum Tisch und seine Wirkung auf ein Werkstück, das sich auf der Platte mit Rauhbelag befindet.

Es ist ein Werkstück 58 dargestellt, in das bereits ein Schlitz 59 durch das Werkzeug 1 eingeschnitten ist, wobei der Abtrag an der Stelle 60 des Werkstücks durch das Werkzeug erfolgt. Dieses Werkzeug ragt mit seinem freien Ende durch ein Loch 9 im Tisch 8, welches von der Einlegeplatte 10 bis auf eine dem Werkzeugdurchmesser angepaßte Bohrung 61 verdeckt wird, und kann gegebenenfalls in Richtung seiner Achse 62 verstellt werden, so daß auch Nuten in Werkstücke eingefräst werden können. Der Tisch 8 oder das Werkzeug 1 kann verschwenkbar sein, so daß Schnitte, die im Winkel zu den Hauptebenen auf ebenen Werkstücken verlaufen, ausgeführt werden können.

Auf dem Tisch liegt die Platte 46, die mit der hier nicht dargestellten Führungsschiene 22 verbunden ist und mit dieser geradlinig verschoben werden kann. Auf dem auf der Platte befindlichen Rauhbelag 49 haftet das Werkstück 58. Die Unterseite der Platte 46 ist mit einem Gleitbelag 57, wie beispielsweise einer Teflonbeschichtung versehen.

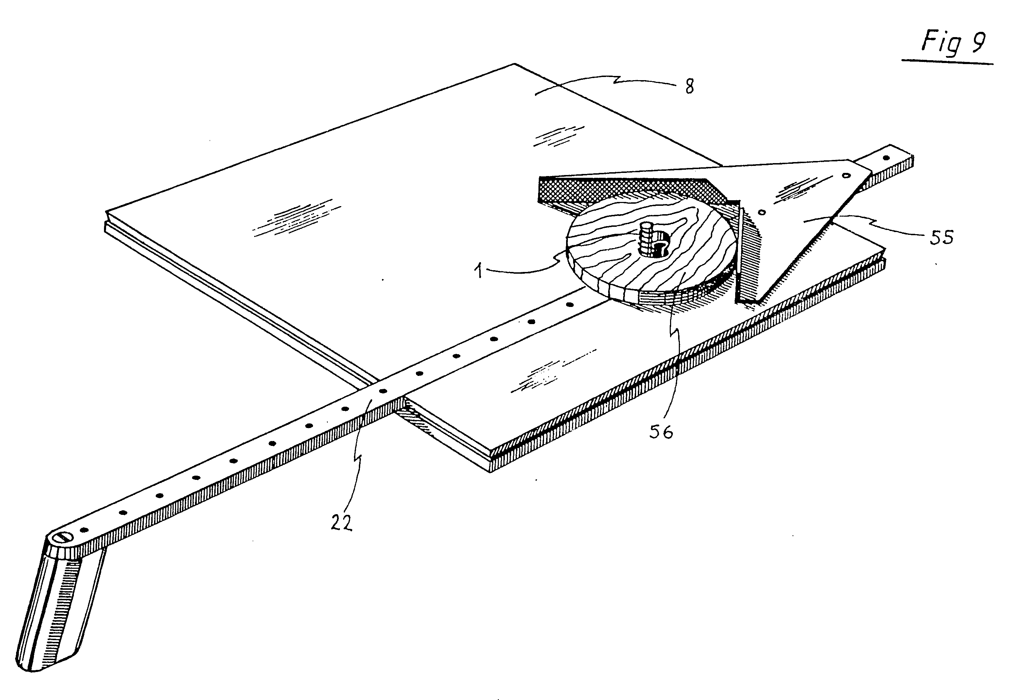

Eine weitere Hilfseinrichtung ist in Fig. 9 dargestellt. Um bei kreisförmigen Werkstücken eine Mittelöffnung einwandfrei konzentrisch zu vergrößern oder zum Kreisumfang konzentrisch verlaufende Schnitte oder Nuten anzubringen, wird ein auf die Führungsschiene 22 aufsteckbares Prisma 55 verwendet, dessen Abstand zum Werkzeug 1 durch Verschieben der Führungsschiene 22 verändert werden kann. Die gewünschte Einstellung kann durch Festklemmen der Führungsschiene fixiert werden. Nun genügt es, das kreisrunde Werkstück gegen das Prisma zu drücken und von Hand in einer der Werkzeugrotation entgegengesetzten Richtung zu drehen, um die Öffnung auf die gewünschte Größe konzentrisch zum Außendurchmesser auszuschneiden.

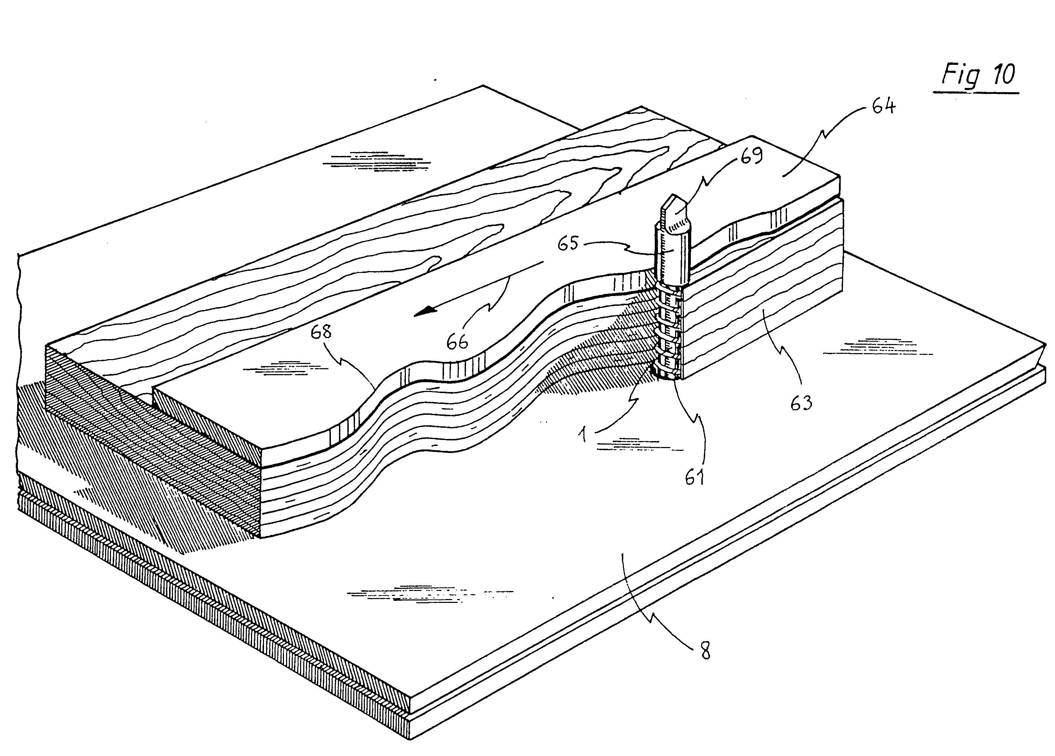

In Figur 10 ist eine Anordnung dargestellt, bei der das Werkzeug 1 nach der Erfindung durch eine Bohrung 61 in einem Werkzeugtisch 8 ragt. Das Werkzeug kann gegebenenfalls durch eine nicht dargestellte Verstelleinrichtung unterschiedlich weit aus dem Werktisch herausgeführt werden. Auf dem Werktisch befindet sich ein Werkstück 63, auf dem eine Schablone 64 befestigt ist. Am Ende der Schnecke 1 befindet sich eine gewindefreie Zone 65. Wird das Werkstück 63 auf dem Tisch 8 in Richtung des Pfeiles 66 so geführt, daß die Zone 65 immer an dem Rand 68 der Führung 64 anliegt, dann kann ohne Mühe in das Werkstück 63 ein Schlitz eingeschnitten werden, dessen Breite dem Durchmesser des Werkzeugs entspricht und der die gleiche Kontur wie der Rand 68 hat. Das Wesentliche der Erfindung besteht dabei darin, daß das Werkstück ohne mechanische oder sonstige Führungshilfen in einer Hauptrichtung geführt werden kann, die mit dem Pfeil 66 angedeutet wird, ohne daß hierbei Kräfte auftreten, die die das Werkstück führende Person gefährden könnten. Es ist für das Werkstück 63 keine feste Führung in einer senkrecht zu der Schnecke 1 verlaufenden Richtung erforderlich, da diese Schnecke auf das Werkstück in keiner Richtung senkrecht zu ihrer eigenen Achse nennenswerte Kräfte ausübt.

An dem freien Ende der gewindefreien Zone 65 kann bekannterweise eine Bohrspitze 69 vorgesehen sein, mit der eine Bohrung in ein Werkstück eingebracht werden kann, so daß in ein Werkstück z. B. ein gekrümmter Schlitz eingebracht werden kann, der nicht bis zum Rand des Werkstücks geführt zu sein braucht, indem das Werkstück auf die Bohrspitze 69 von oben aufgesetzt und auf den Tisch 8 gedrückt wird, wodurch zunächst eine einfache Bohrung in das Werkstück eingebracht wird, die dann durch ein Führen des Werkstücks entlang des Randes 68 der Schablone 64 zu einem beliebig langen Schlitz erweitert werden kann.

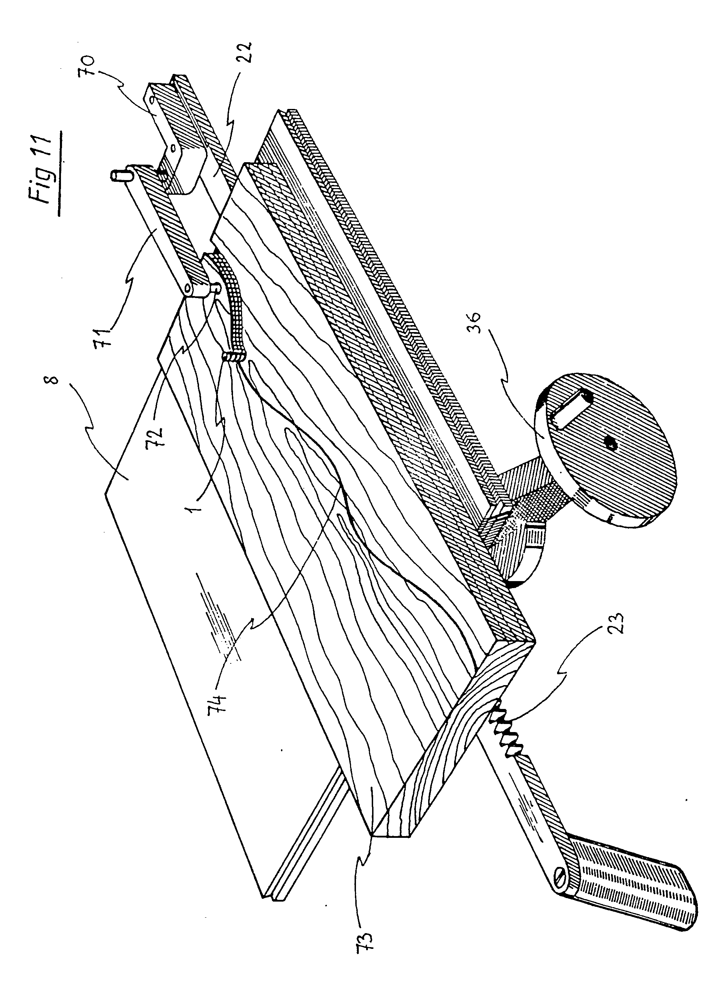

In Fig. 11 ist eine Vorrichtung dargestellt, mit deren Hilfe es möglich ist, an dicken Werkstücken ohne den Kraftaufwand, der normalerweise für den Vorschub von Hand aufzubringen wäre, geschweifte Schnitte unter Nutzung des Vorschubgetriebes durchzuführen.

Am hinteren Ende der Führungsschiene 22 wird ein Ausleger 70 befestigt, an dessen Ende ein Schlepparm 71 pendelnd gelagert ist, so daß er nach rechts und links ausschlagen kann. Die Höhenlage des Schlepparmes kann zur Anpassung an die Dicke des Werkstückes verändert werden. Der Schlepparm 71 hat an seinem freien Ende einen Mitnehmerstift 72, der in eine im Werkstück anzubringende Bohrung eingreift. Bei Betätigung des Vorschubgetriebes über Kurbel 36 wird die Führungsschiene 22 in Bewegung versetzt und das Werkstück 73 gegen das Werkzeug 1 gezogen, wobei gleichzeitig von Hand das Werkstück entsprechend dem Verlauf der gewünschten, kurvenförmigen Schnittlinie in die erforderliche Richtung ausgelenkt wird. Am dargestellten Beispiel erfolgt der Schnitt entlang der Linie 74.

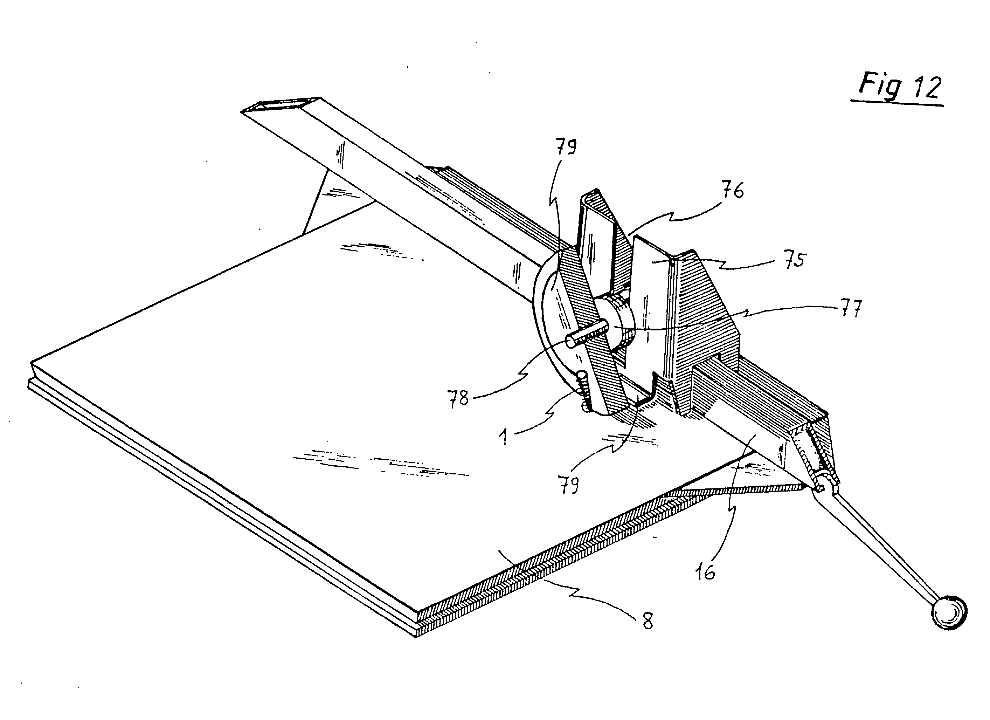

Fig. 12 zeigt eine Vorrichtung zum Schneiden von Schrägen an runden oder anders gekrümmten, plattenförmigen Werkstücken. Auf dem Anschlag 16, der quer auf den Tisch 8 aufgesetzt wird, befindet sich ein aufsteckbares Führungsstück 75, das mit einem Schlitz 76 versehen ist, der eine gleichmäßige Breite aufweist und etwa 10 mm über der unteren Kante des Führungsstücks endet. In diesem Schlitz gleitet ein herausnehmbarer, mit einem Stift 78 versehener Rundkörper 77, der einen Einstich aufweist, dessen Maße derart bestimmt sind, daß sowohl ein Auf- und Abgleiten als auch ein Drehen des Rundkörpers 77 in dem Schlitz 76 ohne nennenswertes Spiel möglich ist.

Zum Schneiden einer Schräge wird die zu bearbeitende Scheibe, deren Zentrumsbohrung mit dem Durchmesser des Stiftes 78 übereinstimmen muß, auf diesen bis zur Anlage an der Planfläche des Rundkörpers 77 aufgesteckt und mit diesem entlang des Schlitzes 76 soweit nach unten geschoben, bis sie sich auf dem Tisch 8 abstützt. Der entsprechend bemessene Vorsprung 79 des Führungsstücks 75 sorgt für die rückseitige Abstützung des Werkstückes beim Schneiden. Nachdem das Werkzeug 1 durch Neigung des Antriebsaggregates im gewünschten Winkel zum Werkstück eingestellt wurde, wird der Anschlag 16 mit der Vorrichtung und dem darauf befindlichen Werkstück 79, das in Fig. 12 im Teilschnitt dargestellt ist, soweit an das rotierende Werkzeug herangeschoben, bis die gewünschte Frästiefe erreicht ist. Der Anschlag wird nunmehr auf dem Tisch festgeklemmt und die Scheibe von Hand gedreht. Die dem erfindungsgemäßen Werkzeug eigene, nahezu entlang dessen Längsachse wirkende Schnittkraft bewirkt, daß das Werkstück sowohl gegen den Tisch als auch gegen den als rückwärtige Stütze wirkenden Vorsprung 79 gedrückt wird, was einen sauberen Schnitt ermöglicht.

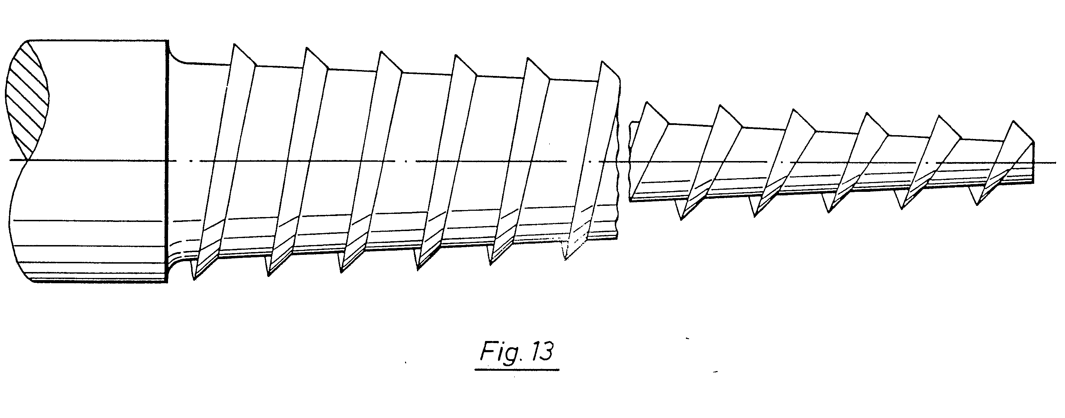

Fig. 13 zeigt in vergrößerter Ansicht eine konische Ausbildung des Werkzeugs 1'. Mit dieser Ausbildungsform wird erreicht, daß die Festigkeit des Werkzeugs von seiner Spitze zum Motor hin zunimmt, so daß mit diesem Werkzeug bei dünnen Werkstücken kleinere Schnitte als bei dicken gemacht werden können. Um eine gerade Schnittkante zu erhalten, wird das Werkzeug so verschwenkt, daß die Schnittkante des Werkstücks eben in vertikaler Richtung verläuft.

Die Vorzüge des Gerätes nach der Erfindung lassen sich wie folgt zusammenfassen :

In einem wirtschaftlich herstellbaren Gerät werden die vorteilhaften Möglichkeiten und Eigenschaften verschiedener Arten von Sägen, Fräsen, sowie eines Hoblers vereinigt und zum Teil sogar noch übertroffen, ohne deren Nachteile zu übernehmen. Ohne Umrüsten oder Werkzeugwechsel können Holz, Kunststoff, sogar Metall geringer Festigkeit und andere Werkstoffe und Teile beliebig sperriger Form anstandslos bei bester Qualität der bearbeiteten Fläche in sägender, schneidender, hobelnder bzw. glättender Weise zerspant werden, wobei die Führung des Werkstücks gefahrlos von Hand erfolgen kann, entweder nach Anriß oder entlang von Schablonen. Da das Werkzeug im Werkstück nicht einhaken kann, sind auch freihändig feinste Nachschnitte von wenigen hundertstel Millimetern durchführbar. Mit einfachen Hilfsmitteln, wie z. B. verstellbarem Anschlag, sind sehr genaue Parallelschnitte möglich, ebenso wie sehr genaue Kreisschnitte um einen feststehenden, in einstellbarem Abstand von der Wendel fixierbaren Zapfen.

Die Verletzungsgefahr ist auf ein Minimum reduziert, insbesondere ist sie unvergleichbar geringer als bei Kreissägen, Bandsägen, Fräsen und Hoblern, sofern kleine Werkstücke bearbeitet werden.

Der Antrieb ist leise, da keine hohen Drehzahlen notwendig sind. Die Wendel zerspant nahezu geräuschlos und erzeugt feine Kräuselspäne, die größtenteils unter den Tisch fallen, ohne vom Werkzeug, wie bei Kreissägen und Hoblern, weggeschleudert zu werden. Es entsteht fast kein Staub.

In der vorstehenden Beschreibung und in den Zeichnungen werden außer dem Werkzeug 1 eine Reihe von Vorrichtungen nach der Erfindung beschrieben und dargestellt, die in Kombination mit dem Werkzeug zu technischen Vorteilen, insbesondere für Heimwerk und Kleinhandwerk führen Dies sind die in der Hohlwelle 4 des Motors 5 angeordnete Spindel 2, an der das Werkzeug 1 befestigt ist, die verschwenkbare Anordnung des Motors, die besondere Halterung der Führungsschiene 22 in einer Nut 21 mit rechteckigem Querschnitt und magnetischer Fixierung, sowie einem Getriebeantrieb 36, die Platte 46 mit dem Rauhbelag 49, das Prisma 55 zum Fräsen von runden Werkstücken, die Schleppeinrichtung 70, 71, die Führung 75, 76, 77, 78, 79 zum Schrägschneiden der Kanten runder Körper, die konische Ausbildung des Werkzeugs und die Visierhilfe 51. Auf alle diese Vorrichtungen bezieht sich die Erfindung.

### Ansprüche

1. Stichsäge mit einer mit einem Antriebsmotor (5) in Drehantriebsverbindung stehenden Werkzeugspindel (4), mit der ein Arbeitstisch (8) zum Auflegen eines zu sägenden plattenförmigen Werkstückes (21) fest verbindbar ist, wobei ein stabförmiges rotierendes Werkzeug (1) durch eine Öffnung (9) im Arbeitstisch (8) in Verlängerung der Spindelachse stummelartig bis in den zu bearbeitenden Bereich des Werkstückes vorspringt und entlang wenigstens einer wendelförmig um seinen Umfang verlaufenden Linie Schneidelemente trägt, dadurch gekennzeichnet, dass als Schneidelement der eine Schneidkante bildende Spitzenbereich einer schraubenförmig um den Umfang des Werkzeuges (1) verlaufenden vorspringenden Rippe ausgebildet ist, und die Rippe ein- oder mehrgängig durchgehend wendelförmig mit einer Steigung zwischen 5° und 15° gegen eine senkrecht zur Werkzeuglängsachse liegende Ebene um den Umfang durchlaufend so ausgebildet ist, dass die Schneide auf gradlinigen Mantellinien liegt.

2. Stichsäge nach Anspruch 1, dadurch gekennzeichnet, dass die über dem Arbeitstisch (8) vorspringende Länge des stabförmigen Werkzeuges (1) einstellbar ist.

3. Stichsäge nach Anspruch 1 oder 2, dadurch gekennzeichnet, dass die wendelförmig verlaufende Schneide des stabförmigen Werkzeuges (1) auf gradlinigen Mantellinien liegt, die an einer sich zum freien Ende des Werkzeugs hin verjüngenden Kegeloberfläche liegen (Fig. 13).

4. Stichsäge nach einem der vorhergehenden Ansprüche, dadurch gekennzeichnet, dass die Steigung der wendelförmigen Schneide gegen eine senkrecht zur Werkzeuglängsachse liegenden Ebene zwischen 5° und 10° beträgt.

5. Stichsäge nach einem der vorhergehenden Ansprüche, dadurch gekennzeichnet, dass der die wendelförmig um den Umfang verlaufende Schneide einschliessende Zylinder oder Kegel einen grössten Durchmesser zwischen 2 mm und 6 mm aufweist, und die Steigung der Schneide 8° beträgt.

6. Stichsäge nach einem der vorhergehenden Ansprüche, wobei der Arbeitstisch (46) zum Auflegen eines zu sägenden Werkstückes (58) auf einer Führung (8) quer zur Spindelachse verschiebbar ist, und die Führung (8) mit der Spindel (4) fest verbindbar und im Arbeitstisch (46) ein in Verschieberichtung verlaufender Schlitz (48) zum Durchtritt des stabförmigen Werkzeuges (1) vorgesehen ist, dadurch gekennzeichnet, dass auf der Oberfläche des Arbeitsttisches (46) ein Rauhbelag (49) zum Auflegen eines zu sägenden plattenförmigen Werkstückes (58) vorgesehen ist (Fig. 7, 8).

7. Stichsäge nach einem der vorhergehenden Ansprüche, dadurch gekennzeichnet, dass die Spindel (4) mit dem Arbeitstisch (8 ; 46) in einer Schräglage verbindbar ist, in der die Längsachse des Werkzeugs (1) in einem Winkel unter 90° gegen die Tischebene liegt.

**Claims**

1. Rotating rod saw provided with a tool spindle (4), which is in rotary drive contact with a drive motor (5) and to which there is fixedly mountable a work table (8) for placing thereon a planar workpiece (21) to be sawn, a bar-shaped rotating tool (1) projecting through an opening (9) in the work table (8), extending the spindle axis, in a stub-like manner as far as the workpiece zone to be treated and carrying cutting elements along at least one line extending helically around its circumference, characterised in that there is provided as the cutting element the top zone, forming a cutting edge, of a projecting rib which extends spirally around the circumference of the tool (1), and in that the rib is designed so as to be single- or multi-start and continuously helical with a pitch between 5° and 15° relative to a plane that is perpendicular to the tool longitudinal axis around the circumference so that the cutting edge lies on straight surface lines.

2. Rotating rod saw as claimed in Claim 1, characterised in that the bar-shaped tool (1) length projecting above the work table (8) is adjustable.

3. Rotating rod saw as claimed in Claim 1 or 2, characterised in that the helically extending cutting edge of the bar-shaped tool (1) lies on straight surface lines, which lie on a conical surface which tapers towards the free end of the tool (Fig. 13).

4. Rotating rod saw as claimed in one of the preceding claims, characterised in that the pitch of the helical cutting edge relative to a plane that is perpendicular to the tool longitudinal axis is between 5° and 10°.

5. Rotating rod saw as claimed in one of the preceding claims, characterised in that the cylinder or cone including the cutting edge extending helically around the circumference has a maximum diameter of between 2 mm and 6 mm, and in that the pitch of the cutting edge is 8°.

6. Rotating rod saw as claimed in one of the preceding claims, the work table (46) for placing thereon a workpiece (58) to be sawn being displaceable on a guide (8) transversely to the spindle axis, and the guide (8) beingrigidly connected with the spindle (4), and there being provided in the work table (46) a slot (48), which extends in the direction of displacement, for the passage of the bar-shaped tool (1), characterised in that there is provided on the surface of the work table (46) a rough covering (49) for placing thereon a planar workpiece (58) to be sawn (Figs. 7, 8).

7. Rotating rod saw as claimed in one of the preceding claims, characterised in that the spindle (4) is mountable to the work table (8 ; 46) in an inclined position, in which the longitudinal axis of the tool (1) is at an angle of below 90° relative to the plane of the table.

**Revendications**

1. Scie passe-partout comportant une broche à outil (4) liée pour son entraînement rotatif avec un moteur d'entraînement (5), et à laquelle on peut relier de façon fixe une table de travail (8) pour poser une pièce (21) en forme de plaque à scier, la scie comportant en outre un outil rotatif en forme de tige (1) qui prolonge en porte à faux l'axe de la broche, fait saillie par une ouverture (9) pratiquée dans la table de travail (8) jusque dans la zone à travailler de la pièce d'œuvre et porte des éléments coupants le long d'au moins une ligne s'étendant hélicoïdalement sur son pourtour , caractérisée en ce qu'est formée comme élément coupant la crête constituant une arête coupante d'une nervure en saillie s'étendant hélicoïdalement sur le pourtour de l'outil (1), et en ce que la nervure est formée en une ou plusieurs spires de façon continue et hélicoïdale avec une pente comprise entre 5 et 15° par rapport à un plan perpendiculaire à l'axe longitudinal de l'outil et s'étend continûment sur le pourtour de manière que le fil se situe sur des génératrices rectilignes.

2. Scie passe-partout selon la revendication 1, caractérisée en ce que la longueur d'outil en forme de tige (1) faisant saillie au-dessus de l'établi (8) est réglable.

3. Scie passe-partout selon l'une des revendications 1 ou 2, caractérisée en ce que le fil s'étendant hélicoïdalement de l'outil en forme de tige (1) se situe sur des génératrices rectilignes portées par une surface conique se rétrécissant vers l'extrémité libre de l'outil (figure 13).

4. Scie passe-partout selon l'une des revendications précédentes, caractérisée en ce que la pente du fil hélicoïdal par rapport à un plan perpendiculaire à l'axe longitudinal de l'outil est comprise entre 5° et 10°.

5. Scie passe-partout selon l'une des revendications précédentes, caractérisée en ce que le cylindre ou cône portant le fil s'étendant hélicoïdalement sur le pourtour présente un diamètre maximum compris entre 2 mm et 6 mm, et en ce que la pente du fil s'élève à 8°.

6. Scie passe-partout selon l'une des revendications précédentes dans laquelle la table de travail (46) pour poser une pièce à scier (58) peut être déplacée sur un guidage (8) transversalement à l'axe de la broche, et dans laquelle le guidage (8) est relié rigidement à la broche (4) tandis qu'il est prévu dans la table de travail (46) une fente (48) s'étendant dans la direction du déplacement pour le passage de l'outil en forme de tige (1), caractérisée en ce qu'un revêtement rugueux (49) est prévu à la surface de la table de travail (46) pour y poser une pièce d'œuvre en forme de plaque (58) à scier (figures 7 et 8).

7. Scie passe-partout selon l'une des revendications précédentes, caractérisée en ce que la broche (4) peut être reliée à la table de travail (8 ; 46) en une position oblique dans laquelle l'axe longitudinal de l'outil (1) se situe à un angle inférieur à 90° par rapport au plan de la table.

_Fig 1_

0 024 251

_Fig 2_

0 024 251

_Fig 3_

Fig 4a

Fig 4b

Ansicht von C

Fig 4c
Schnitt A - B

0 024 251

_Fig 5a_

_Fig 5b_

0 024 251

Fig 6

## Fig 7

0 024 251

Fig 8

5°-15°

1

59

58

60

49

48

8

62

10

9

57

46

8

*Fig 9*

8

55

1

56

22

0 024 251

Fig 10

0 024 251

*Fig 11*

0 024 251

Fig 12

*Fig. 13*

0 024 251